# EUROPEAN PATENT APPLICATION

(11) **EP 3 650 276 A1**
(43) Date of publication of application: **13.05.2020**
(21) Application number: 18827584.6
(22) Date of filing: 25.06.2018
(51) Int. Cl.: B60R 11/04, B60K 37/04, B60R 11/02, B60W 40/08

(54) **PASSENGER IMAGING DEVICE**

(30) Priority: 06.07.2017 JP 2017132674; 06.07.2017 JP 2017132675
(71) Applicant: Mazda Motor Corporation, Aki-gun Hiroshima 730-8670 (JP)
(72) Inventor: NAKAMURA Hajime, Hiroshima 730-8670 (JP); MORITANI Takayuki, Hiroshima 730-8670 (JP); HISATSUNE Akihiro, Hiroshima 730-8670 (JP)
(74) Representative: Herrmann, Uwe
(86) International application number: PCT/JP2018/024015
(87) International publication number: WO 2019/009125

(57) **Abstract**

Provided is a passenger imaging device which is capable of reliably imaging the face of a passenger without spoiling an aesthetic property of an instrument panel. The passenger imaging device (12) is designed to image a passenger in a vehicle in which a display device (10) is provided on an instrument panel (4), and comprises a camera lens (22) which is built in the display device and whose entrance surface is oriented toward the passenger. The display device is provided to stand upwardly from an upper surface of the instrument panel. The display device comprises a display (16) and an outer frame (18) adjacent to at least a part of an outer edge of the display, and the camera lens is provided inside the outer frame.

## Description

### TECHNICAL FIELD

The present invention relates to a passenger imaging device, and more particularly to a passenger imaging device for imaging a passenger in a vehicle in which a display device is provided on an instrument panel.

### BACKGROUND ART

Heretofore, it has been known to provide a camera for imaging the face of a driver, in a passenger compartment of a vehicle, so as to monitor an intoxicated state and driving behaviors of the driver.

For example, in the following Patent Document 1, it is disclosed that a face imaging camera for imaging the face of a driver is disposed on the side of the back surface of a half mirror in a rearview mirror assembly of a vehicle, while being oriented backwardly with respect to a traveling direction of the vehicle.

Further, in the following Patent Document 2, it is disclosed that a driver monitoring camera for recognizing the state of the face of a driver is provided on an upper portion of a steering column cover.

### CITATION LIST

### [Parent Document]

Parent Document 1: JP 2010-000941A
Patent Document 2: JP 2010-186251A

### SUMMARY OF INVENTION

### [Technical Problem]

However, in the case where the camera is installed in the rearview mirror assembly as described in the Parent Document 1, the driver's face will get out of an imageable range of the camera unless the angle of the rearview mirror is adequately adjusted.

Further, in the case where the camera is provided on the steering column cover as described in the Parent Document 2, the driver's face is likely to be hidden behind the driver's arm(s). Here, it is conceivable that the camera is configured as a separate component such that it is protruded above the steering column cover. In this case, however, an aesthetic property of the entire instrument panel is deteriorated.

The present invention has been made to solve the above conventional problem, and an object thereof is to provide a passenger imaging device capable of reliably imaging the face of a passenger, without spoiling an aesthetic property of an instrument panel.

### [Solution to Technical Problem]

In order to achieve the above object, the present invention provides a passenger imaging device for imaging a passenger in a vehicle in which a display device is provided on an instrument panel. The passenger imaging device comprises a camera lens which is built in the display device and whose entrance surface is oriented toward the passenger.

In the passenger imaging device of the present invention having the above feature, the camera lens is built in the display device disposed on the instrument panel without any obstacle with respect to the passenger, so that it is possible to reliably image the passenger, while avoiding deterioration in aesthetic property of the instrument panel.

Preferably, in the passenger imaging device of the present invention, the display device is provided to stand upwardly from an upper surface of the instrument panel.

According to this feature, the camera lens is built in the display device which is disposed at a position closer to the face of the passenger as comparted with other in-vehicle devices, so that it is possible to more vividly image the passenger.

Preferably, in the passenger imaging device of the present invention, the display device comprises a display, and an outer frame adjacent to at least a part of an outer edge of the display, wherein the camera lens is provided inside the outer frame.

According to this feature, the camera lens can be disposed by utilizing a dead space in the outer frame of the display device, so that it is possible to build the camera lens in the display device while suppressing enlargement in size of the display device.

More preferably, the above passenger imaging device is configured to image a driver of the vehicle, wherein the camera lens is provided on the side of a driver seat with respect to the display in a vehicle-width direction of the vehicle.

According to this feature, the camera lens can be provided in the display device at a position closer to the face of the driver, so that it is possible to more vividly image the passenger.

More preferably, in the above passenger imaging device, the camera lens is provided on an upper side with respect to the display in an upward-downward direction of the vehicle.

According to this feature, the camera lens can be provided in the display device at a position closer to the face of the driver, so that it is possible to more vividly image the passenger.

Preferably, the passenger imaging device of the present invention is configured to image a driver of the vehicle, and further comprises a light-emitting unit which is built in the display device and whose emitting surface is oriented toward the driver, wherein the camera lens is provided at one of opposite ends of the display device on the side of a driver seat in a vehicle-width direction of the vehicle, and the light-emitting unit is provided at the other end of the display device on the side of a front passenger seat in the vehicle-width direction.

According to this feature, the light-emitting unit is built in the display device disposed on the instrument panel without any obstacle with respect to the driver, so that it is possible to reliably image the driver at any hour of day or night, while avoiding deterioration in aesthetic property of the instrument panel.

More preferably, in the above passenger imaging device, the display device comprises a display, and an outer frame adjacent to at least a part of an outer edge of the display, wherein the camera lens is built in a portion of the outer frame on the side of the driver seat in the vehicle-width detection, and the light-emitting unit is built in a portion of the outer frame on the side of the front passenger seat in the vehicle-width detection

According to this feature, the camera lens and the light-emitting unit can be disposed by utilizing a dead space in the outer frame of the display device, so that it is possible to build the camera lens and the light-emitting unit in the display device while suppressing enlargement in size of the display device.

More preferably, in the above passenger imaging device, the camera lens is built in a portion of the outer frame on the side of the driver seat in the vehicle-width detection and on an upper side in an upward-downward direction of the vehicle, and the light-emitting unit is built in a portion of the outer frame on the side of the front passenger seat in the vehicle-width detection and on a lower side in the upward-downward direction.

According to this feature, the camera lens and the light-emitting unit built in the display device can be much more spaced apart from each other, so that it is possible to more reliably prevent the red-eye effect.

### [Effect of Invention]

The passenger imaging device of the present invention can reliably image the face of a passenger without spoiling the aesthetic property of the instrument panel.

### BRIEF DESCRIPTION OF DRAWINGS

FIG. 1 is a front view of the entirety of an instrument panel of a vehicle equipped with a passenger imaging device according to a first embodiment of the present invention.
FIG. 2 is a front view of a display device provided on the instrument panel.
FIG. 3 is a front view of the entirety of an instrument panel of a vehicle equipped with a passenger imaging device according to a second embodiment of the present invention.
FIG. 4 is a front view of the entirety of an instrument panel of a vehicle equipped with a passenger imaging device according to a third embodiment of the present invention.
FIG. 5 is a front view of the entirety of an instrument panel of a vehicle equipped with a passenger imaging device according to a fourth embodiment of the present invention.

### DESCRIPTION OF EMBODIMENTS

With reference to the accompanying drawings, passenger imaging devices according to preferred embodiments of the present invention will now be described.

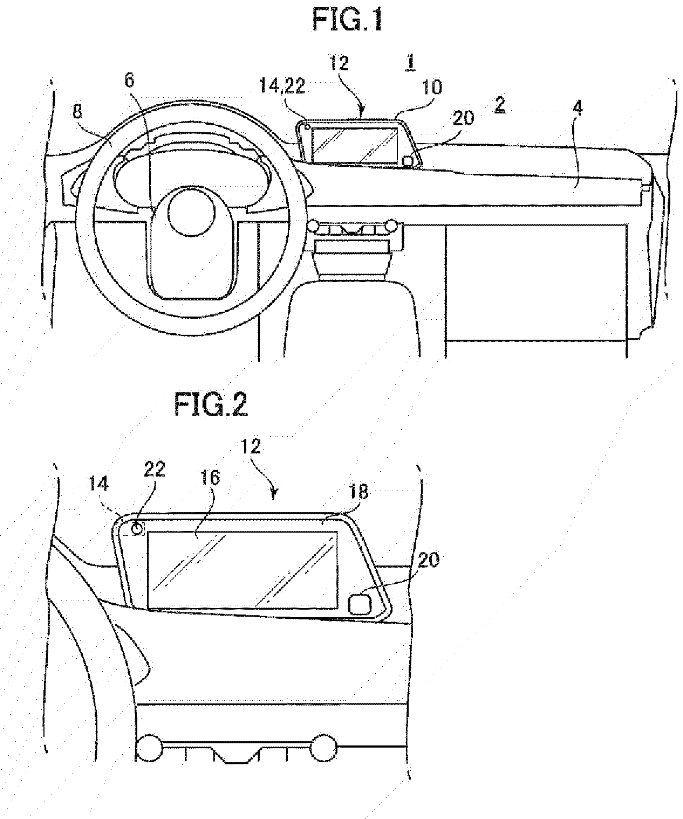

First of all, an outline of a passenger imaging device according to a first embodiment of the present invention will be described based on FIG. 1. FIG. 1 is a front view of the entirety of an instrument panel of a vehicle equipped with the passenger imaging device according to the first embodiment.

As shown in FIG. 1, an instrument panel 4 is provided in a front region of a passenger compartment 1 of a vehicle to extend in a vehicle-width direction of the vehicle along and beneath a front windshield 2. The instrument panel 4 has an opening formed in a driver seat-side region (in FIG. 1, a left region) of a rearward-facing surface thereof in a forward-rearward (longitudinal) direction of the vehicle, and a steering column shaft 6 is inserted through this opening. A steering wheel 8 is attached to the steering column shaft 6. Further, a display device 10 (display device, in-vehicle device) is provided on an upper surface of a vehicle-width directional central portion of the instrument panel 4 to stand upwardly from the upper surface.

The passenger imaging device 12 according to the first embodiment comprises a camera 14 built in the display device 10, and is operable to image a driver by the camera 14. An image of the driver's face imaged by the passenger imaging device 12 is used for detection of driving behaviors of the driver or estimation of emotions of the driver.

For example, the degree of closing of the eyelid or the degree of opening of the pupil can be detected based on the image of the driver's face, to estimate sleepiness of the driver based on a resulting detection value.

Further, a line-of-sight direction or a line-of-sight moving speed can be detected based on the image of the driver's face, to determine, based on a resulting detection value, whether there is a possibility of distracted driving.

Further, the degree of upturning of the mouth corners or the presence or absence of wrinkles on the eye corners can be detected based on the image of the driver's face, to determine, based on a resulting detection value, whether the driver is smiling.

Next, a specific configuration of the passenger imaging device 12 according to the first embodiment will be described based on FIG. 2. FIG. 2 is a front view of the display device 10 provided on the instrument panel 4 shown in FIG. 1.

As shown in FIG. 2, the display device 10 comprises a display 16, and an outer frame 18 surrounding an outer edge of the display 16. As the display 16, it is possible to use, e.g., a touch panel-type display in which a touch screen is provided on a front surface of a flat plate display such as a liquid crystal display or an organic EL display. The outer frame 18 is fixed to the upper surface of the vehicle-width directional central portion of the instrument panel 4. The outer frame 18 holds the outer edge of the display 16, and functions as a decorative panel for hiding an outer peripheral portion of the display 16.

The passenger imaging device 12 comprises the camera 14 built in the display device 10, and a light-emitting unit 20 built in the display device 10.

The camera 14 comprises a camera lens 22 whose entrance surface is oriented toward a passenger, and a not-shown image sensor (e.g., CCD or CMOS) for converting entering light formed as an image through the camera lens 22, into an electrical signal. The camera lens 22 is built in a first end area of the outer frame 18 of the display device 10 on the side of a driver seat in the vehicle-width direction and on an upper side in an upward-downward direction of the vehicle (in FIG. 2, an upper left end of the display device 10), such that the camera lens 22 itself is not exposed to the outside of the outer frame 18 of the display device 10. Further, the camera lens 22 is oriented such that the eyes of the driver fall within the field-of-view of the camera lens 22.

The light-emitting unit20 is provided as a means to illuminate the passenger as a target object to be imaged, and comprises a not-shown light-emitting element (e.g., near-infrared LED). This light-emitting unit 20 is built in a second end area of the outer frame 18 of the display device 10 on the side of a front passenger seat in the vehicle-width direction and on a lower side in the upward-downward direction (in FIG. 2, a lower right end of the display device 10), such that the light-emitting unit 20 itself is not exposed to the outside of the outer frame 18 of the display device 10, as with the camera lens 22. Further, an emitting surface of the light-emitting unit 20 for light from the light-emitting element is oriented toward the driver. The light-emitting element is controlled to emit light while a shutter of the camera 14 is opened according to brightness of an imaging environment.

As mentioned above, the camera lens 22 is provided at the first end area of the outer frame 18 of the display device 10 on the driver seat side in the vehicle-width direction and on the upper side in the upward-downward direction, and the light-emitting unit 20 is provided at the second end area of the outer frame 18 of the display device 10 on the front passenger seat side in the vehicle-width direction and on the lower side in the upward-downward direction. That is, in the display device 10, the light-emitting unit 20 is provided at a position sufficiently spaced apart from the camera lens 22 (e.g., by 5 cm or more). Thus, illumination light emitted from the light-emitting unit 20 is reflected by the retina of the eye of the driver, toward a direction deviating from the camera lens 22. Therefore, the illumination light reflected by the retina does not enter the camera lens 22 directly, so that it is possible to prevent so-called "red-eye effect".

With regard to the outer frame 18 of the display device 10, an optically-transparent cover or film is disposed on a region of the outer frame 18 covering the camera lens 22 and the light-emitting unit 20 from the driver seat side (from the rear side in the forward-rearward direction), to protect the camera lens 22 and the light-emitting unit 20 from adhesion of dirt, while permitting transmission of light. Here, the transmittance of the cover or film covering the light-emitting unit 20 may be set to be lower than that of the cover or film covering the camera lens 22.

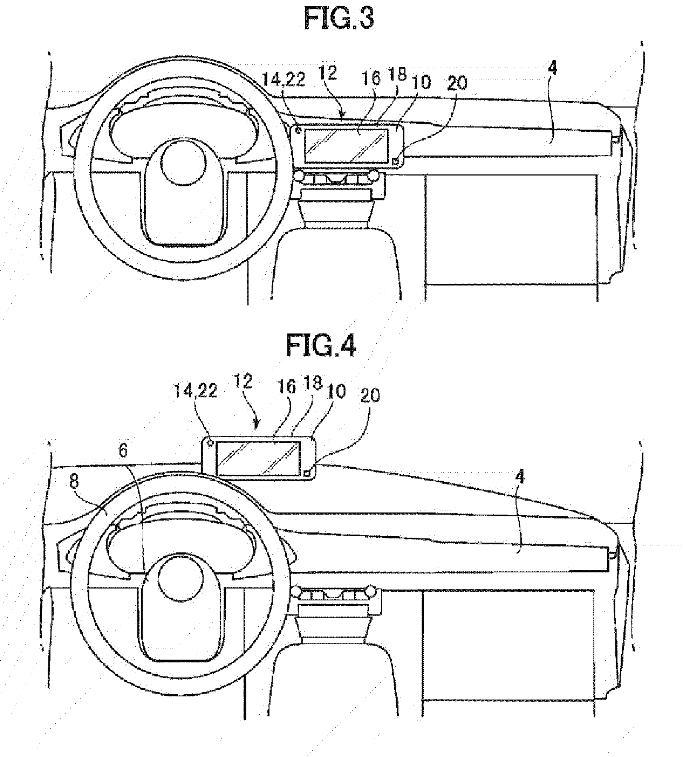

Next, a specific configuration of a passenger imaging device 12 according to a second embodiment of the present invention will be described based on FIG. 3. FIG. 3 is a front view of the entirety of an instrument panel 4 of a vehicle equipped with the passenger imaging device 12 according to the second embodiment.

The instrument panel 4 in the second embodiment is constructed in the same manner as that in the first embodiment, except for the arrangement of the display device 10.

In the second embodiment, as shown in FIG. 3, the display device 10 is fitted in an opening formed in an upper region of a forward-rearward directional rear surface of the vehicle-width directional central portion of the instrument panel 4. In this case, the display 16 of the display device 10 needs not necessarily be held by the outer frame 18, but may be held by another holding member, inside the instrument panel 4. Specifically, the outer frame 18 of the display device 10 is deposed to become flush with the surface of the instrument panel 4 and close a gap between the outer peripheral portion of the display 16 and the opening of the instrument panel 4.

In the second embodiment, a camera lens 22 of the passenger imaging device 12 is built in a first end area of the outer frame 18 of the display device 10 on the driver seat side in the vehicle-width direction and on the upper side in the upward-downward direction (in FIG. 3, the upper left end of the display device 10), such that the camera lens 22 itself is not exposed to the outside of the outer frame 18 of the display device 10, as with the first embodiment.

Further, an light-emitting unit 20 of the passenger imaging device 12 is built in a second end area of the outer frame 18 of the display device 10 on the front passenger seat side in the vehicle-width direction and on the lower side in the upward-downward direction (in FIG. 3, the lower right end of the display device 10), such that the light-emitting unit 20 itself is not exposed to the outside of the outer frame 18 of the display device 10, as with the first embodiment.

Next, a specific configuration of a passenger imaging device 12 according to a third embodiment of the present invention will be described based on FIG. 4. FIG. 4 is a front view of the entirety of an instrument panel 4 of a vehicle equipped with the passenger imaging device 12 according to the third embodiment.

The instrument panel 4 in the third embodiment is constructed in the same manner as that in the first and second embodiments, except for the arrangement of the display device 10.

In the third embodiment, as shown in FIG. 4, the display device 10 is provided to stand upwardly from the upper surface of the instrument panel 4 to extend between an approximately vehicle-width directional center of the instrument panel 4 and the steering column shaft 6. The outer frame 18 of the display device 10 is fixed to the upper surface of the instrument panel 4, and holds the outer edge of the display 16.

In the third embodiment, a camera lens 22 of the passenger imaging device 12 is built in a first end area of the outer frame 18 of the display device 10 on the driver seat side in the vehicle-width direction and on the upper side in the upward-downward direction (in FIG. 4, the upper left end of the display device 10), such that the camera lens 22 itself is not exposed to the outside of the outer frame 18 of the display device 10, as with the first and second embodiments.

Further, an light-emitting unit 20 of the passenger imaging device 12 is built in a second end area of the outer frame 18 of the display device 10 on the front passenger seat side in the vehicle-width direction and on the lower side in the upward-downward direction (in FIG. 4, the lower right end of the display device 10), such that the light-emitting unit 20 itself is not exposed to the outside of the outer frame 18 of the display device 10, as with the first and second embodiments.

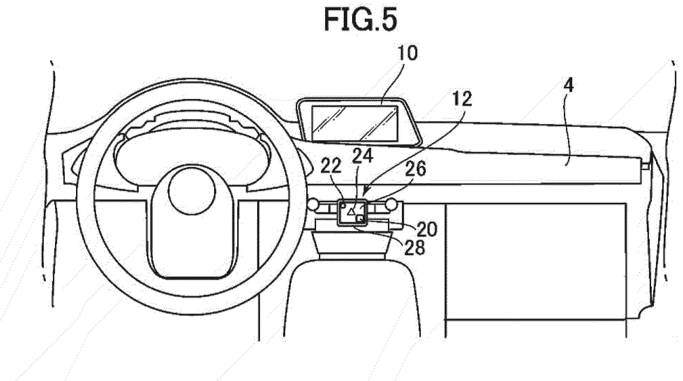

Next, a specific configuration of a passenger imaging device 12 according to a fourth embodiment of the present invention will be described based on FIG. 5. FIG. 5 is a front view of the entirety of an instrument panel 4 of a vehicle equipped with the passenger imaging device 12 according to the fourth embodiment.

The instrument panel 4 and the display device 10 in the fourth embodiment are constructed in the same manner as that in the first embodiment.

In the fourth embodiment, as shown in FIG. 5, a hazard flasher switch 24 (in-vehicle device) is fitted in an opening formed in the upper region of the forward-rearward directional rear surface of the vehicle-width directional central portion of the instrument panel 4. The hazard flasher switch 24 is a switch for switching between ON and OFF states of a hazard flasher, and comprises a switch body 26, and an outer frame 28 adjacent to opposite edges of the switch body 26 in the vehicle-width direction. The switch body 26 needs not necessarily be held by the outer frame 28, but may be held by another holding member, inside the instrument panel 4. The outer frame 28 of the hazard flasher switch 24 is deposed to become flush with the surface of the instrument panel 4 and close a gap between each of the vehicle-width directional opposite edges of the switch body 26 and the opening of the instrument panel 4.

In the fourth embodiment, a camera lens 22 of the passenger imaging device 12 is built in a first end area of the outer frame 28 of the hazard flasher switch 24 on the driver seat side in the vehicle-width direction and on the upper side in the upward-downward direction (in FIG. 5, the upper left end of the hazard flasher switch 24), such that the camera lens 22 itself is not exposed to the outside of the outer frame 28.

Further, an light-emitting unit 20 of the passenger imaging device 12 is built in a second end area of the outer frame 28 of the hazard flasher switch 24 on the front passenger seat side in the vehicle-width direction and on the lower side in the upward-downward direction (in FIG. 5, the lower right end of the hazard flasher switch 24), such that the light-emitting unit 20 itself is not exposed to the outside of the outer frame 28.

Next, modifications of the above embodiments will be described.

Although the above embodiments have been described based on an example where the camera lens 22 is built in the first end area of the outer frame 18 (28) of the display device 10 (hazard flasher switch 24) on the driver seat side in the vehicle-width direction and on the upper side in the upward-downward direction, and the light-emitting unit 20 is built in the second end area of the outer frame 18 (28) of the display device 10 (hazard flasher switch 24) on the front passenger seat side in the vehicle-width direction and on the lower side in the upward-downward direction, any other suitable arrangement different therefrom may be employed.

For example, the camera lens 22 may be built in the first end area of the outer frame 18 (28) on the driver seat side in the vehicle-width direction and on the upper side in the upward-downward direction, and the light-emitting unit 20 may be built in a third end area of the outer frame 18 (28) on the front passenger seat side in the vehicle-width direction and on the upper side in the upward-downward direction. Alternatively, the camera lens 22 may be built in a fourth end area of the outer frame 18 (28) on the driver seat side in the vehicle-width direction and on the lower side in the upward-downward direction, and the light-emitting unit 20 may be built in the second end area of the outer frame 18 (28) on the front passenger seat side in the vehicle-width direction and on the lower side in the upward-downward direction,

Further, the camera lens 22 and the light-emitting unit 20 may be built in the display device 10 or the hazard flasher switch 24, in a portion different from the outer frame 18 (28), such as a gap between the display 16 (switch body 26) and the outer frame 18 (28).

Although the above embodiments have been described based on an example where the passenger imaging device 12 is configured to image a driver, the passenger imaging device 12 may be configured to image a passenger other than the driver (such as a passenger seated in a front passenger seat or a rear seat). In this case, the camera lens 22 may be provided in the outer frame 19 of the display device 10 at a position other than the end area on the driver seat side in the vehicle-width direction.

Further, the passenger imaging device 12 may be configured to be devoid of the light-emitting unit 20.

Next, functions/advantageous effects of the passenger imaging devices 12 according to the above embodiments and the modified embodiments will be described.

The camera lens 22 is built in the display device 10 disposed on the instrument panel 4 without any obstacle with respect to the passenger, so that it is possible to reliably image the passenger, while avoiding deterioration in aesthetic property of the instrument panel 4.

The camera lens 22 is built in the display device 10 disposed on the upper surface of the instrument panel 4 which is closer to the face of the passenger, as comparted with other in-vehicle devices, so that it is possible to more vividly image the passenger.

The camera lens 22 is provided inside the outer frame 18, so that the camera lens 22 can be disposed by utilizing a dead space in the outer frame 18 of the display device 10, and therefore it is possible to build the camera lens 22 in the display device 10 while suppressing enlargement in size of the display device 10.

The passenger imaging device 12 is configured to image a driver of the vehicle, and thus the camera lens 22 is provided in the display device 10 at a position closer to the face of the driver, so that it is possible to more vividly image the passenger.

In the display device 10, the camera lens 22 is provided on the upper side with respect to the display 16 in the upward-downward direction, so that it is possible to more vividly image the passenger.

The light-emitting unit 20 is built in the display device 10 disposed on the instrument panel 4 without any obstacle with respect to the driver, so that it is possible to reliably image the driver at any hour of day or night, while avoiding deterioration in aesthetic property of the instrument panel 4.

The camera lens 22 is built in a portion of the outer frame 18 on the driver seat side in the vehicle-width detection, and the light-emitting unit 20 is built in a portion of the outer frame 18 on the front passenger seat side in the vehicle-width detection, the camera lens 22 and the light-emitting unit 20 can be disposed by utilizing a dead space in the outer frame 18 of the display device 10, and therefore it is possible to build the camera lens 22 and the light-emitting unit 20 in the display device 10 while suppressing enlargement in size of the display device 10.

The camera lens 22 is built in a portion of the outer frame 18 on the driver seat side in the vehicle-width detection and on the upper side in the upward-downward direction, and the light-emitting unit 20 is built in a portion of the outer frame 18 on the side of the front passenger seat in the vehicle-width detection and on the lower side in the upward-downward direction, the camera lens 22 and the light-emitting unit 20 built in the display device 10 can be much more spaced apart from each other, and therefore it is possible to more reliably prevent the red-eye effect.

### LIST OF REFERENCE SIGNS

1: passenger compartment
2: front windshield
4: instrument panel
6: steering column shaft
8: steering wheel
10: display device
12: passenger imaging device
14: camera
16: display
18: outer frame
20: light-emitting unit
22: camera lens
24: hazard flasher switch
26: switch body
28: outer frame

## Claims

1. A passenger imaging device for imaging a passenger in a vehicle in which a display device is provided on an instrument panel, comprising a camera lens which is built in the display device and whose entrance surface is oriented toward the passenger.

2. The passenger imaging device as recited in claim 1, wherein the display device is provided to stand upwardly from an upper surface of the instrument panel.

3. The passenger imaging device as recited in claim 1 or 2, wherein the display device comprises a display, and an outer frame adjacent to at least a part of an outer edge of the display, and wherein the camera lens is provided inside the outer frame.

4. The passenger imaging device as recited in claim 3, which is configured to image a driver of the vehicle, wherein the camera lens is provided on the side of a driver seat with respect to the display in a vehicle-width direction of the vehicle.

5. The passenger imaging device as recited in claim 4, wherein the camera lens is provided on an upper side with respect to the display in an upward-downward direction of the vehicle.

6. The passenger imaging device as recited in claim 1, which is configured to image a driver of the vehicle, and further comprises a light-emitting unit which is built in the display device and whose emitting surface is oriented toward the driver, wherein
the camera lens is provided at one of opposite ends of the display device on the side of a driver seat in a vehicle-width direction of the vehicle, and
the light-emitting unit is provided at the other end of the display device on the side of a front passenger seat in the vehicle-width direction.

7. The passenger imaging device as recited in claim 6, wherein the display device comprises a display, and an outer frame adjacent to at least a part of an outer edge of the display, and wherein
the camera lens is built in a portion of the outer frame on the side of the driver seat in the vehicle-width detection, and
the light-emitting unit is built in a portion of the outer frame on the side of the front passenger seat in the vehicle-width detection.

8. The passenger imaging device as recited in claim 7, wherein
the camera lens is built in a portion of the outer frame on the side of the driver seat in the vehicle-width detection and on an upper side in an upward-downward direction of the vehicle, and
the light-emitting unit is built in a portion of the outer frame on the side of the front passenger seat in the vehicle-width detection and on a lower side in the upward-downward direction.
